# EUROPÄISCHE PATENTANMELDUNG

(11) **EP 1 276 335 A2**
(43) Veröffentlichungstag der Anmeldung: **15.01.2003**
(21) Anmeldenummer: 02100691.1
(22) Anmeldetag: 11.06.2002
(51) Int. Cl.: H04Q 7/22

(54) **Verfahren zum Übertragen von Multicast-Nachrichten in einem Funksystem sowie entsprechend ausgestaltetes Funksystem und entsprechend ausgestalteter Sender und Empfänger**

(30) Priorität: 04.07.2001 DE 10132273
(71) Anmelder: SIEMENS AKTIENGESELLSCHAFT, 80333 München (DE)
(72) Erfinder: Beckmann, Mark, 38102, Braunschweig (DE); Eckert, Michael, 38122, Braunschweig (DE); Hans, Martin, 31141, Hildesheim (DE); Otte, Andreas, 29227, Celle (DE)

(57) **Zusammenfassung**

Es wird ein Verfahren zum Übertragen von gleichzeitig für eine Gruppe von Empfängern (UE) bestimmten Multicast-Nachrichten in einem Funksystem, insbesondere einem UMTS-Mobilfunksystem, vorgeschlagen, wobei vor der Übertragung einer Multicast-Nachricht eine Ressourcenzuweisungsnachricht übertragen und anschließend von den zu der Gruppe (A) gehörenden Empfängern (UE) jeweils eine Verbindung zu dem Sender (BS, RNC) gemäß dieser Ressourcenzuweisungsnachricht aufgebaut wird. Erst dann erfolgt die Übertragung der Multicast-Nachricht von dem Sender (BS, RNC) über die somit aufgebauten Verbindungen an die einzelnen zu der Gruppe (A) gehörenden Empfänger (UE).

## Beschreibung

Verfahren zum Übertragen von Multicast-Nachrichten in einem Funksystem sowie entsprechend ausgestaltetes Funksystem und entsprechend ausgestalteter Sender und Empfänger

Die vorliegende Erfindung betrifft ein Verfahren zum Übertragen von Multicast-Nachrichten in einem Funksystem, insbesondere einem Mobilfunksystem, sowie ein entsprechend ausgestaltetes Funksystem sowie entsprechend ausgestaltete Sender und Empfänger.

Die Mobilfunktechnik befindet sich in einer raschen Entwicklung. Derzeit wird an der Standardisierung des so genannten UMTS-Mobilfunksystems ("Universal Mobile Telecommunication System") der dritten Mobilfunkgeneration gearbeitet.

Als Multicast-Nachrichten werden Mitteilungen bezeichnet, welche von einem Sender, z.B. in einem Mobilfunksystem von einer Basisstation, gleichzeitig an eine (als Multicast-Gruppe bezeichnete) Gruppe von Empfängern, z.B. Mobilstationen, übertragen werden, d.h. der Sender sendet eine Multicast-Nachricht lediglich einmal an die zu der jeweiligen Multicast-Gruppe gehörenden Empfänger, wobei dem Sender gegebenenfalls nicht bekannt ist, welche der im Sendebereich des Senders befindlichen Mobilstationen zu der Multicast-Gruppe gehören und somit als Empfänger für die gesendete Multicast-Nachricht in Frage kommen.

Während bereits seit längerer Zeit Ansätze zur Übertragung von derartigen Multicast-Nachrichten in Mobilfunksystemen diskutiert werden, sind diesbezüglich noch keine vollständigen und zufriedenstellenden Vorschläge bekannt.

Daher liegt der vorliegenden Erfindung die Aufgabe zugrunde, ein Verfahren zum Übertragen von Multicast-Nachrichten in einem Funksystem, insbesondere einem Mobilfunksystem, vorzuschlagen, womit Multicast-Nachrichten mit geringem Aufwand, zuverlässig und sicher übertragen werden können. Des Weiteren soll mit Hilfe der vorliegenden Erfindung ein entsprechend ausgestaltetes Funksystem mit einem geeigneten Sender und Empfänger bereitgestellt werden.

Diese Aufgabe wird erfindungsgemäß durch ein Verfahren mit den Merkmalen des Anspruches 1 bzw. ein Funksystem mit den Merkmalen des Anspruches 27 und einen Sender gemäß Anspruch 29 bzw. einen Empfänger gemäß Anspruch 31 gelöst. Die Unteransprüche definieren jeweils bevorzugte und vorteilhafte Ausführungsformen der vorliegenden Erfindung.

Erfindungsgemäß wird vorgeschlagen, vor der Übertragung von Multicast-Nachrichten eine Mitteilung zur Zuweisung bzw. Allokierung von Ressourcen in dem Funksystem, insbesondere zur Zuweisung geeigneter Übertragungskanäle, zu übertragen, wobei von den zu der entsprechenden Multicast-Gruppe gehörenden Empfängern diese Mitteilung ausgewertet und jeweils eine dieser Mitteilung entsprechende Verbindung zu dem Sender aufgebaut bzw. konfiguriert wird, so dass anschließend eine Übertragung der Multicast-Nachrichten von dem Sender an die Empfänger über die zuvor konfigurierten Verbindungen erfolgen kann. Bei den Multicast-Nachrichten kann es sich insbesondere auch um unregelmäßig über die Zeit verteilte Daten handeln.

Mit der anfänglich von dem Sender übertragenen Mitteilung zur Zuweisung von Ressourcen in dem Funksystem werden den zu der Multicast-Gruppe gehörenden Empfängern vorzugsweise Ressourcen eines allgemeinen Transportkanals und eines allgemeinen physikalischen Kanals, auf den der allgemeine Transportkanal abgebildet wird, zugewiesen. Unter einem "allgemeinen Kanal" ("Common Channel") wird ein von allen Empfängern les- bzw. hörbarer Kanal verstanden, welcher somit im Gegensatz zu einem so genannten "Dedicated Channel" keinem speziellen Empfänger zugewiesen ist.

Die zur Zuweisung von Ressourcen übertragene Mitteilung des Senders enthält vorzugsweise Informationen zur Konfiguration des allgemeinen Transportkanals und des allgemeinen physikalischen Kanals, so dass die zu der Multicast-Gruppe gehörenden Empfänger den allgemeinen Transportkanal und den allgemeinen physikalischen Kanal entsprechend dieser Mitteilung zur Vorbereitung der Übertragung von Multicast-Nachrichten konfigurieren können.

Die zur Zuweisung von Ressourcen vorgesehen Mitteilung des Senders kann insbesondere über einen allgemeinen logischen Kontroll- oder Steuerkanal übertragen werden und einen Identifikator für die jeweilige Multicast-Gruppe aufweisen, so dass die einzelnen Empfänger durch Auswertung dieses Identifikators feststellen können, ob sie zu der entsprechenden Multicast-Gruppe gehören bzw. die nachfolgend übertragenen Multicast-Nachrichten für sie bestimmt sind.

Alternativ kann die zur Zuweisung von Ressourcen vorgesehen Mitteilung des Senders auch über einen speziellen logischen Kontroll- oder Steuerkanal, welcher ausschließlich für die Übermittlung von Kontrollnachrichten oder Kontrollmitteilungen für Multicast-Gruppen vorgesehen ist, übertragen werden.

Nachdem sich ein Empfänger, d.h. in einem Mobilfunksystem eine Mobilstation, bei der Senderseite, d.h. in einem Mobilfunksystem bei dem Netzbetreiber bzw. der Mobilfunknetz-Kontrolleinheit, für eine Multicast-Gruppe angemeldet hat, wird dem Empfänger von der Senderseite der Identifikator für die jeweilige Multicast-Gruppe mitgeteilt.

Hat ein Empfänger von dem Sender eine Mitteilung über das Vorliegen von zu sendenden Multicast-Nachrichten erhalten und gehört der Empfänger zu einer Multicast-Gruppe, wird von dem Empfänger eine entsprechende Multicast-Einheit in der so genannten BMC-Schicht ("Broadcast Multicast Controller") des Empfängers, welche mit einer entsprechenden RLC-Einheit in der so genannten RLC-Schicht ("Radio Link Control") des Schichtenmodells verbunden ist, konfiguriert. Diese RLC-Einheit ist vorzugsweise über einen allgemeinen Datenkanal mit der so genannten MAC-Schicht ("Medium Access Control") verbunden, wobei dieser allgemeine Datenkanal auf den zuvor erwähnten allgemeinen Transportkanal abgebildet wird. Sobald sich der Empfänger von der entsprechenden Multicast-Gruppe wieder abmeldet, wird die Multicast-Einheit dieses Empfängers in der BMC-Schicht wieder aufgelöst.

Haben alle zu der betroffenen Multicast-Gruppe gehörenden Empfänger eine Signalisierungsverbindung zu dem Sender aufgebaut, kann von dem Sender die bereits zuvor erwähnte (und nachfolgend der Einfachheit halber als "Ressourcenzuweisungsmitteilung" oder "Ressourcenzuweisungsnachricht" bezeichnete) Mitteilung zur Zuweisung von Ressourcen des Funksystems zur Vorbereitung der Übertragung der Multicast-Nachrichten gesendet werden, so dass die zu der jeweiligen Multicast-Gruppe gehörenden Empfänger den allgemeinen Transportkanal und den allgemeinen physikalischen Kanal in Abhängigkeit von den in dieser Mitteilung enthaltenen Konfigurationsinformationen konfigurieren können und anschließend eine Übertragung der Multicast-Nachrichten möglich ist.

Die Ressourcen, d.h. der entsprechende allgemeine Transportkanal und der allgemeine physikalische Kanal, werden vorzugsweise lediglich für eine bestimmte Zeitspanne zugewiesen, wobei beispielsweise der Start- und Endzeitpunkt dieser Zeitspanne den einzelnen Empfängern mit der Ressourcenzuweisungsmitteilung mitgeteilt werden, wobei nach Ablauf dieser Zeitspanne dieser allgemeine Transportkanal und dieser allgemeine physikalische Kanal vorzugsweise wieder abgebaut werden.

Die vorliegende Erfindung eignet sich bevorzugt zum Einsatz in einem Mobilfunksystem, insbesondere in einem UMTS-Mobilfunksystem. Selbstverständlich ist jedoch die vorliegende Erfindung nicht auf diesen bevorzugten Anwendungsbereich beschränkt, sondern kann allgemein in jedem Funksystem eingesetzt werden, in dem die Übertragung von Multicast-Nachrichten möglich sein soll, wobei zu beachten ist, dass von der vorliegenden Erfindung sowohl die Senderseite als auch die Empfängerseite betroffen sind.

Die vorliegende Erfindung wird nachfolgend näher unter Bezugnahme auf die beigefügte Zeichnung anhand bevorzugter Ausführungsbeispiele erläutert.

Fig. 1 zeigt eine vereinfachte Darstellung einer Mobilfunkzelle eines Mobilfunksystems zur Erläuterung der erfindungsgemäßen Übertragung von Multicast-Nachrichten,

Fig. 2 zeigt ein Zustandsdiagramm zur Erläuterung der Übertragung von Multicast-Nachrichten gemäß einem bevorzugten Ausführungsbeispiel der vorliegenden Erfindung,

Fig. 3 zeigt eine Darstellung mehrerer Schichten eines Schichtenmodells bei Anwendung des auch anhand Fig. 2 erläuterten Ausführungsbeispiels,

Fig. 4 zeigt einen möglichen Aufbau einer erfindungsgemäßen Multicast-Nachricht bzw. Ressourcenzuweisungsnachricht,

Fig. 5 zeigt eine Darstellung eines Schichtenmodells zur Erläuterung der erfindungsgemäßen Übertragung von Multicast-Nachrichten, und

Fig. 6A und Fig. 6B zeigen Darstellungen einer so genannten "Physical Shared Allocation Message" gemäß dem Stand der Technik.

Im Rahmen der vorliegenden Erfindung wird ein Verfahren zur Übertragung von Multicast-Nachrichten bzw. zur Ressourcenallokierung zur Vorbereitung der Übertragung von Multicast-Nachrichten vorgeschlagen, wobei dies insbesondere unter Verwendung eines allgemeinen Transportkanals und eines allgemeinen physikalischen Kanals, der zu verschiedenen Zeiten verschiedenen Mobilstationen zugewiesen werden kann, geschieht. Ein Beispiel dafür ist der in UMTS-Mobilfunksystemen ("Universal Mobile Telecommunication System") als "Downlink Shared Channel" (DSCH) bezeichnete Kanal. Dabei wird insbesondere nachfolgend auch beschrieben, wie die Ressourcen durch Signalisierung auf einem allgemeinen Kanal einzelnen Multicast-Gruppen zugewiesen werden, wobei im Rahmen der vorliegenden Erfindung mit "allgemeiner Kanal" ("Common Channel") ein Kanal gemeint ist, der von allen Mobilstationen gelesen werden kann.

Da die vorliegende Erfindung teilweise Gemeinsamkeiten mit einer bereits herkömmlicher Weise für UMTS-Mobilfunksystemen vorgesehenen und zu anderen Zwecken übertragenen Ressourcenzuweisungsnachricht, nämlich der so genannten "Physical Shared Channel Allocation Message", hat, soll nachfolgend zunächst die Generierung und Erzeugung dieser herkömmlichen Ressourcenzuweisungsnachricht erläutert werden, ehe auf die Besonderheiten und Details der vorliegenden Erfindung eingegangen wird.

### DIE "PHYSICAL SHARED CHANNEL ALLOCATION MESSAGE" GEMÄSS UMTS

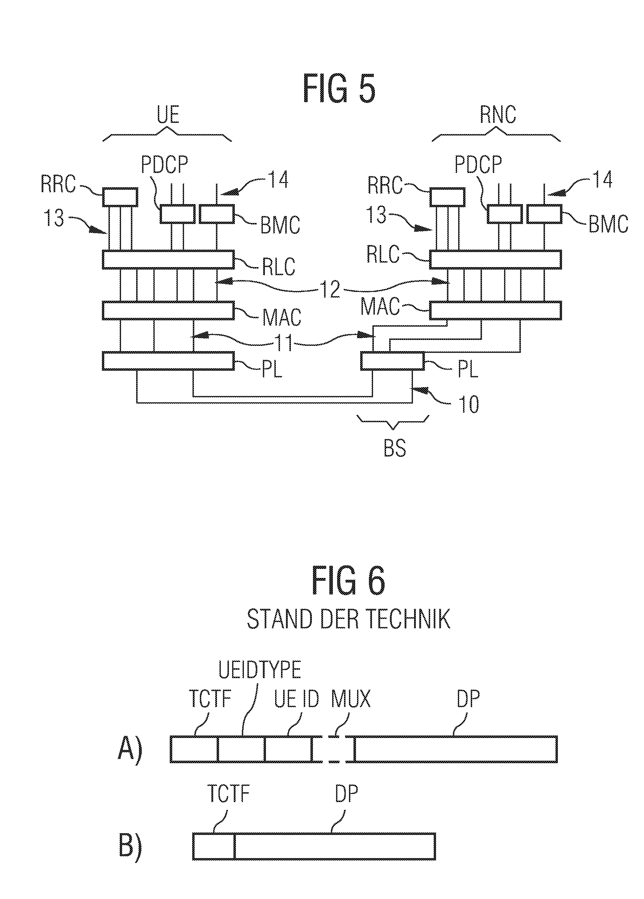

Das Schichtenmodell der Protokolle auf der Luftschnittstelle gemäß dem UMTS-Mobilfunkstandard ist in Fig. 5 dargestellt.

Jede Mobilstation UE besteht aus einer physikalischen Schicht PL ("Physical Layer"), die senderseitig für die Verarbeitung der Daten zur Übertragung über die Luftschnittstelle über physikalische Kanäle 10 verantwortlich ist und empfangsseitig die empfangenen Daten so an eine darüber liegenden Medienzugangskontrollschicht MAC ("Medium Access Control") weitergibt, dass sie von dieser Schicht weiterverarbeitet werden können. Netzwerkseitig befindet sich die physikalische Schicht PL in einer Basisstation BS, welche über eine Festnetzverbindung mit einer Funknetzwerk-Kontrolleinheit RNC ("Radio Network Controller") des jeweiligen Mobilfunksystems bzw. Mobilfunknetzbetreibers verbunden ist. Die Verbindungen zwischen der physikalischen Schicht PL und der MAC-Schicht werden Transportkanäle 11 genannt und geben an, wie die Daten übertragen werden (z.B. auf allgemeinen Kanälen oder auf Kanälen, die lediglich einer bestimmten Mobilstation gewidmet sind). Die MAC-Schicht hat Aufgaben wie z.B. die Identifizierung der Nutzer, für welche ein Paket bestimmt ist, falls es auf allgemeinen Kanälen übertragen wird, und die Abbildung von logischen Kanälen 12 auf die Transportkanäle 11. Dafür fügt die MAC-Schicht senderseitig Kontrollinformationen (z.B. über die Identität der Mobilstation) zu den zu übertragenden Datenpaketen hinzu, die sie von einer Funkverbindungskontrollschicht RLC ("Radio Link Control") erhalten hat. Empfangsseitig werden diese Kontrollinformationen ausgewertet und wieder von den Datenpaketen entfernt, bevor diese über die logischen Kanäle 12 an die RLC-Schicht weitergeleitet werden. Als logische Kanäle 12 werden die Verbindungen zwischen der MAC-Schicht und der RLC-Schicht bezeichnet.

Die RLC-Schicht ist verantwortlich für die Überwachung der Datenübertragung, d.h. für die Feststellung von fehlenden Datenpaketen und eventuell deren erneute Anforderung. In der RLC-Schicht können mehrere Einheiten definiert werden. Jede RLC-Einheit ist dabei mit einer Verbindung zwischen höheren Schichten und RLC (z.B. Radio Bearer) verbunden. Auch die RLC-Schicht kann senderseitig den Datenpaketen, die sie von höheren Schichten bekommen hat, Kontrollinformationen hinzufügen. Diese Kontrollinformationen werden empfangsseitig genutzt, um z.B. zu beurteilen, ob Datenpakete fehlen, und werden von den Datenpaketen entfernt, bevor diese wieder an die höheren Schichten weitergeleitet werden.

Oberhalb der RLC-Schicht befindet sich eine Funkressourcen-Kontrollschicht RRC ("Radio Ressource Control"), die für die Konfiguration der unter ihr liegenden Schichten und vor allem für den Verbindungsaufbau verantwortlich ist. Die Verbindungen 13 zwischen der RLC-Schicht und der RRC-Schicht werden "Signalling Radio Bearer" (SRB) genannt. Außerdem befinden sich oberhalb der RLC-Schicht Funkträger, so genannte "Radio Bearer", die für die eigentliche Datenübertragung verwendet werden und die Verbindung 14 zwischen der RLC-Schicht und der darüber liegenden Anwendung darstellen. Werden Paketdaten übertragen, befindet sich oberhalb der RLC-Schicht zudem eine so genannte Paketdaten-Konvergenzschicht PDCP("Packet Data Convergence Protocol"), die z.B. für die Komprimierung von IP-Paketen ("Internet Protocol") verantwortlich ist. Weiterhin befindet sich oberhalb der RLC-Schicht eine so genannte "Broadcast Multicast"-Kontrollschicht BMC ("Broadcast Multicast Controller"), welche für den Empfang von so genannten "Cell Broadcast"-Nachrichten verwendet wird. In der BMC-Schicht können ähnlich wie bei der RLC-Schicht mehrere BMC-Einheiten definiert werden.

Zur Übertragung insbesondere von Paketdaten wurde für UMTS bereits ein so genannter DSCH-Kanal("Downlink Shared Channel") spezifiziert. Der DSCH ist ein Transportkanal 11, der auf einen physikalischen Kanal PDSCH ("Physical Downlink Shared Channel") abgebildet wird. Das besondere an diesem Kanal ist, dass eine Funknetzwerk-Kontrolleinheit RNC Ressourcen innerhalb einer Funkzelle reservieren und die Ressourcen für eine gewisse Zeit einer bestimmten Mobilstation UE zuweisen kann, so dass es in der angegebenen Zeit eine nur dieser einen Mobilstation UE gewidmete Ressource ist. Dadurch lässt sich unregelmäßig anfallender Datenverkehr in effizienter Weise an die Mobilstation senden.

Bei UMTS sind zwei verschiedene Modi definiert, der TDD-("Time Division Duplex") und der FDD-Modus ("Frequency Division Duplex"). Im Fall des TDD-Modus wird die PDSCH-Ressource der RRC-Schicht in der Funknetzwerk-Kontrolleinheit RNC über eine Nachricht "Physical Shared Channel Allocation" einer Mobilstation UE zugewiesen, die entweder über einen allgemeinen Kanal ("Common Channel"), der von allen Mobilstationen UE gleichzeitig gelesen werden kann, oder über einen Kanal, der nur einer bestimmten Mobilstation UE zugewiesen ist, an die Mobilstation gesendet wird. Bei UMTS wird der allgemeine Transportkanal 11, der von mehreren Mobilstationen UE gleichzeitig gelesen werden kann und auf dem Nachrichten vom Netzwerk an die Mobilstationen UE gesendet werden können, als FACH-Kanal ("Forward Access Channel") bezeichnet. Dieser allgemeine Transportkanal 11 wird in der physikalischen Schicht PL auf einen allgemeinen physikalischen Kanal 10 abgebildet, der bei UMTS als SCCPCH ("Secondary Common Control Physical Channel") bezeichnet wird. Für den Fall, dass die Nachricht über einen allgemeinen Kanal gesendet wird, enthält die Nachricht einen Identifikator für die Mobilstation, für die diese Nachricht bestimmt ist.

Im Rahmen der vorliegenden Erfindung ist insbesondere die Übertragung der RRC-Nachricht "Physical Shared Channel Allocation Message" auf allgemeinen Kanälen von Interesse. Daher wird im Folgenden vorwiegend dieser Fall betrachtet.

Des Weiteren kann in diesem Fall die Übertragung der zuvor genannten Nachricht in zwei Unterfälle aufgeteilt werden.

Im ersten Fall wird die RRC-Nachricht "Physical Shared Channel Allocation Message" zur Ressourcenallokierung in der Funknetzwerk-Kontrolleinheit RNC über einen nur einer bestimmten Mobilstation UE zugewiesenen logischen Kanal 12 von der RLC-Schicht an die MAC-Schicht gegeben und in der Mobilstation UE auch über einen solchen nur der Mobilstation zugewiesenen logischen Kanal von der MAC-Schicht an die RLC-Schicht weitergereicht. Ein solcher nur einer Mobilstation UE zugewiesener logischer Kanal 12 wird bei UMTS als DCCH-Kanal ("Dedicated Control Channel") bezeichnet. Die RLC-Schicht in der Funknetzwerk-Kontrolleinheit RNC kann dabei der Nachricht noch Kontrollinformationen hinzufügen, bevor dieses Paket dann an die MAC-Schicht weitergegeben wird. Da auf dem allgemeinen Transportkanal (FACH) auch Daten für andere Mobilstationen übertragen werden, fügt die MAC-Schicht in der Funknetzwerk-Kontrolleinheit RNC immer bestimmte Kontrollinformation zu einer Nachricht hinzu, wenn die MAC-Schicht diese über den DCCH-Kanal von der RLC-Schicht erhalten hat und auf dem allgemeinen FACH-Transportkanal weiterleiten soll. Mit Hilfe der Kontrollinformationen können die MAC-Schichten in den Mobilstationen unter anderem feststellen, ob die Nachricht für sie bestimmt ist.

Die Kontrollinformationen bestehen dafür wie in Fig. 6A gezeigt unter anderem aus einem Feld UEIDTYPE, welches angibt, wie die Identifikation der Mobilstation aussieht, und einem Feld UEID, das die eigentliche Identifikation für die jeweilige Mobilstation enthält. Darüber hinaus umfassen die MAC-Kontrollinformationen auch ein Feld TCTF ("Target Channel Type Field") und ein Feld MUX. Die Kontrollinformation TCTF gibt dabei an, über welchen logischen Kanal ein Datenpaket, welches auf einen allgemeinen Transportkanal (FACH) weitergeleitet werden soll, an die MAC-Schicht gegeben wurde. Dies ist notwendig, da die Kontrollinformationen, die dem Datenpaket senderseitig hinzugefügt werden, je nachdem von welchem logischen Kanal die über einen allgemeinen Transportkanal weiterzuleitenden Datenpakete stammen, unterschiedlich sind. Wenn also im Feld TCTF die Information enthalten ist, dass das Paket über einen logischen DCCH-Kanal an die MAC-Schicht gegeben wurde, weiß die empfangende Mobilstation, dass die Kontrollinformation aus den oben beschriebenen Feldern besteht. Das Feld MUX wird zum Demultiplexen verwendet, falls mehrere logische Kanäle auf den jeweiligen allgemeinen Transportkanal abgebildet werden. Zudem enthält die Nachricht ein Datenpaket DP mit der eigentlichen Nachrichteninformation, welches die MAC-Schicht von der RLC-Schicht erhalten hat, d.h. das Datenpaket umfasst eine RRC-Nachricht und eventuell hinzugefügte RLC-Kontrollinformationen.

Die in Fig. 6A dargestellte Nachricht wird somit über den jeweiligen allgemeinen Transportkanal (FACH) 11 an die physikalische Schicht PL weitergegeben, welche die Nachricht über einen allgemeinen physikalischen Kanal (SCCPH) 10 an alle Mobilstationen UE in der Zelle sendet, die eine Signalisierungsverbindung zu der Funknetzwerk-Kontrolleinheit RNC aufgebaut haben. Die Konfiguration des allgemeinen Transportkanals 11 und des physikalischen Kanals 10 sowie des logischen Kanals (DCCH) 12 und der RLC-Schicht, der MAC-Schicht und der physikalischen Schicht PL ist allen Mobilstationen beim Aufbau der Signalisierungsverbindung bekannt gemacht worden, so dass alle Mobilstationen die Nachricht empfangen können. Die MAC-Schichten der Mobilstationen überprüfen dann die Identität der Mobilstation, für welche die Nachricht gesendet wurde. Die Mobilstationen, die nicht über die im Feld UEID angegebene Identität identifiziert werden, verwerfen die Nachricht. Die Mobilstation, die über die Identität identifiziert wird, entfernt die MAC-Kontrollinformationen von der Nachricht und gibt die verbleibende Nachricht über den entsprechenden logischen Kanal (DCCH) 12 an die RLC-Schicht weiter, welche ebenfalls die RLC-Kontrollinformationen auswertet und das Nachrichtenpaket anschließend an die RRC-Schicht weiterleitet.

Im zweiten Fall fügt die RRC-Schicht der RRC-Nachricht "Physical Shared Channel Allocation Message" selber eine Information hinzu, mit der diejenige Mobilstation identifiziert wird, für die diese Nachricht vorgesehen ist. Die Nachricht wird an die RLC-Schicht weitergeleitet, welche der Nachricht eventuell RLC-Kontrollinformationen hinzufügt und dieses Datenpaket anschließend über einen allgemeinen logischen Kanal (SHCCH = "Shared Channel Control Channel") 12 an die MAC-Schicht weitergibt. Die MAC-Schicht fügt allen Datenpaketen, die sie von einem logischen Kanal (SHCCH) 12 empfangen hat, bestimmte MAC-Kontrollinformationen hinzu. Diese bestehen wie in Fig. 6B gezeigt nur aus dem Feld TCTF, welches in diesem Fall den Wert "SHCCH" zugewiesen bekommt. Das Datenpaket wird anschließend über einen allgemeinen Transportkanal (FACH) 11 an die physikalische Schicht PL weitergereicht, welche die Nachricht auf einen allgemeinen physikalischen Kanal (SCCPH) 10 über die Luftschnittstelle sendet. Die Konfiguration des allgemeinen Transportkanals 11 und des allgemeinen physikalischen Kanals 10 sowie des logischen Kanals (SHCCH) 12 und der RLC-Schicht, der MAC-Schicht und der physikalischen Schicht PL ist wiederum allen Mobilstationen beim Aufbau der Signalisierungsverbindung bekannt gemacht worden, so dass alle Mobilstationen die Nachricht empfangen können. Die Mobilstationen innerhalb der Funkzelle geben die Nachricht über die MAC-Schicht und RLC-Schicht an die RRC-Schicht weiter. Die MAC-Schichten der Mobilstationen entfernen die MAC-Kontrollinformationen und leiten die Nachricht auf Grund der im Feld TCTF enthaltenen Information über den entsprechenden logischen Kanal (SHCCH) 12 an die RLC-Schicht weiter. Dort werden die RLC-Kontrollinformationen entfernt und die Nachricht an die RRC-Schicht weitergegeben. Erst in der RRC-Schicht wird anhand der in der Nachricht enthaltenen Information überprüft, für welche Mobilstation die Nachricht gesendet wurde. Nur die Mobilstation, die über die angehängte Identität identifiziert wird, verwendet die Nachricht. Alle anderen Mobilstationen verwerfen die Nachricht.

In beiden beschriebenen Fällen enthält die PDSCH-Nachricht Informationen über beispielsweise den Zeitraum, in dem der Mobilstation die PDSCH-Ressourcen zur Verfügung stehen, und die Konfiguration des physikalischen Kanals 10. Alternativ können eine oder auch mehrere Konfigurationen des PDSCH-Kanals auch über die Systeminformationen in der ganzen Zelle verteilt werden und in der Nachricht zur Zuweisung der PDSCH-Ressourcen nur mit einem Identifikator auf die entsprechende Konfiguration verwiesen werden. Für den Fall, dass die Nachricht über einen nur einer Mobilstation zugewiesenen Kanal erfolgt (im weiteren "Dedicated Channel" (DCH) bezeichnet), liest nur diejenige Mobilstation die Nachricht, für welche diese auch bestimmt war.

Im Fall des FDD-Modus erfolgt die Ressourcen-Zuweisung über einen nur der jeweiligen Mobilstation zugewiesenen Kanal ("Dedicated Channel"). Über diesen Kanal wird über ein spezielles Feld ("Transport Format Combination Identifier", TFCI) der Mobilstation mitgeteilt, dass im nächsten Zeitfenster bzw. Rahmen ("Frame") Daten für die Mobilstation auf dem PDSCH-Kanal übertragen werden. Mit dem TFCI-Feld werden die unterschiedlichen Transportformate betreffend die Größe und Anzahl der Datenpakete, welche von unterschiedlichen logischen Kanälen 12, also den Kanälen zwischen der RLC-Schicht und der MAC-Schicht, innerhalb eines derartigen Zeitfensters übertragen werden, bezeichnet. Wird eine bestimmte Belegung des TFCI-Felds verwendet, erkennt die Mobilstation daraus, dass im nächsten Zeitfenster eine Übertragung auf dem PDSCH-Kanal erfolgt. Die Konfiguration des PDSCH-Kanals wurde dabei beim Aufbau der Übertragungsverbindung der Mobilstation mitgeteilt.

Hinsichtlich der RRC-Schicht wird zwischen unterschiedlichen RRC-Zuständen unterschieden. Der PDSCH-Kanal und DSCH-Kanal sind im TDD-Modus nur in den RRC-Zuständen CELL_FACH und CELL_DCH, im FDD-Modus sogar nur im RRC-Zustand CELL_DCH vorhanden. In den Zuständen CELL_PCH und URA_PCH sowie IDLE MODE ist der DSCH-/PDSCH-Kanal nicht verfügbar.

Die verschiedenen Zustände drücken aus, auf welcher Ebene die Position der Mobilstation bekannt ist und welche Ressourcen jeweils zur Verfügung stehen.

Im RRC-Zustand CELL_DCH sind der Mobilstation dedizierte Ressourcen zugewiesen, und die Mobilstation ist auf Zellebene bekannt, d.h. dem Netzwerk ist bekannt, in welcher Zelle sich die jeweilige Mobilstation befindet.

Im RRC-Zustand CELL_FACH sind der Mobilstation allgemeine Ressourcen zugewiesen, die sie sich mit anderen Mobilstationen teilen muss. In diesem Zustand ist die Mobilstation ebenfalls auf Zellebene bekannt.

Im RRC-Zustand CELL_PCH empfängt die Mobilstation Funknachrichten von dem Netzwerk und hört die Benachrichtigungskanäle PICH ("Paging Indicator Channel") und PCH ("Paging Channel"), über die das Netzwerk der Mobilstation mitteilen kann, dass z.B. Nachrichten für die jeweilige Mobilstation vorliegen. Die Mobilstation ist in diesem Zustand auf Zellebene bekannt.

Der RRC-Zustand URA_PCH ist ähnlich zu dem CELL_PCH, jedoch mit dem Unterschied, dass die Position der Mobilstation dem Netzwerk nicht genau bekannt ist, sondern das Netzwerk lediglich Kenntnis hat, in welcher Gruppe von Zellen sich die Mobilstation aufhalten könnte.

Im IDLE MODE empfängt die Mobilstation ebenfalls Funknachrichten vom Netzwerk und hört die Benachrichtigungskanäle PICH und PCH. Im Gegensatz zu den Zuständen URA_PCH und Cell_PCH hat die Funknetzwerk-Kontrolleinheit RNC jedoch keine Kenntnis über die Mobilstation selber und auch nicht darüber, ob sich die Mobilstation in einer der von ihr kontrollierten Zellen befindet.

Der Benachrichtigungsmechanismus besteht aus zwei Stufen. Im ersten Schritt teilt das Netzwerk der Mobilstation durch einen Indikator auf dem PICH-Kanal mit, dass Nachrichten auf dem PCH-Kanal für die Mobilstation vorliegen. Erst dann liest die Mobilstation den PCH-Kanal, in dem die eigentliche Benachrichtigung enthalten ist, aus.

### DIE ÜBERTRAGUNG VON MULTICAST-NACHRICHTEN DER VORLIEGENDEN ERFINDUNG

Aufbauend auf dem im Zusammenhang mit der Nachricht "Physical Shared Channel Allocation Message" beschriebenen Prinzip wird im Rahmen der vorliegenden Erfindung eine Übertragung von Multicast-Nachrichten in einem Funksystem, insbesondere einem Mobilfunksystem, vorgeschlagen. Idealerweise sollen die Multicast-Nachrichten innerhalb einer Funkzelle nur einmal an mehrere Mobilstationen gleichzeitig übertragen werden. Die zu übertragenden Daten können dabei unregelmäßig über die Zeit verteilt sein, so dass eine Übertragung über einen dem DSCH-Kanal ähnlichen Kanal vorteilhaft wäre.

Ein wesentlicher Bestandteil ist dabei die Zuweisung von Ressourcen eines allgemeinen Transportkanals 11 und eines allgemeinen physikalischen Kanals 10 zur Übertragung von Multicast-Nachrichten, ähnlich den bei UMTS vorhandenen Kanälen DSCH/PDSCH. Dies erfolgt insbesondere durch eine Ressourcenzuweisungsnachricht, welche im Folgenden auch als "Multicast Channel Allocation Message" bezeichnet wird und die Konfiguration des allgemeinen Transportkanals 11 und des allgemeinen physikalischen Kanals 10 enthält. Alternativ kann es auch möglich sein, Konfigurationen zusammen mit Identifikatoren an alle Mobilstationen innerhalb einer Zelle zu verteilen und in der Ressourcenzuweisungsnachricht an eine Gruppe von Mobilstationen lediglich den jeweiligen Identifikator zur Auswahl der gewünschten Konfiguration zu senden. Weiterhin soll die Nachricht vorteilhafter Weise eine Information über den Start und Endzeitpunkt einer Zeitspanne enthalten, in der die jeweilige Ressource der Gruppe von Mobilstationen, d.h. der Multicast-Gruppe, zugewiesen ist.

Die Ressourcenzuweisungsnachricht "Multicast Channel Allocation Message" kann auf zwei unterschiedliche Wege an alle Mobilstationen UE in einer Zelle gesendet werden, die eine Signalisierungsverbindung zur Funknetzwerk-Kontrolleinheit RNC aufgebaut haben.

Im ersten Fall wird die Ressourcenzuweisungsnachricht über einen allgemeinen logischen Kontrollkanal, bei UMTS z.B. den SHCCH-Kanal, gesendet und weist einen Identifikator für die jeweilige Multicast-Gruppe auf. Die RRC-Schichten der Mobilstationen UE bestimmen jeweils, ob die Nachricht für die entsprechende Mobilstation bestimmt ist oder nicht.

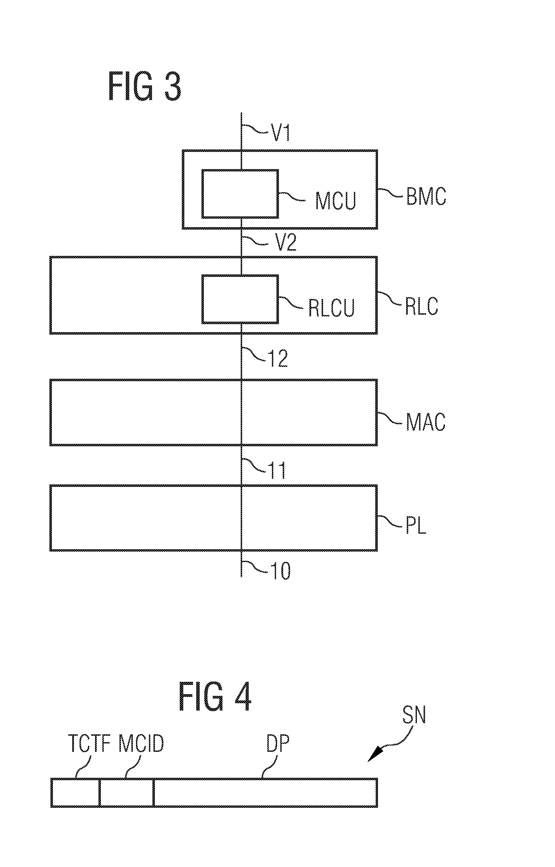

Im zweiten Fall wird die Ressourcenzuweisungsnachricht über einen neuen, speziellen logischen Kontrollkanal, der nur für die Übermittlung von Kontrollnachrichten für Multicast-Gruppen verwendet werden soll, übertragen. Dieser spezielle logische Kanal wird im Folgenden als MCCCH-Kanal ("Multicast Control Channel") bezeichnet. In diesem Fall bildet die MAC-Schicht der Funknetzwerk-Kontrolleinheit RNC den logischen MCCCH-Kanal auf einen allgemeinen Transportkanal 11 ab. Bei Verwendung des allgemeinen FACH-Transportkanals 11 fügt die MAC-Schicht der Nachricht die Kontrollinformation TCTF hinzu und weist dieser Kontrollinformation den Wert "MCCCH" zu. Außerdem fügt die MAC-Schicht der Nachricht eine weitere Kontrollinformation MCID, welche die Multicast-Gruppe identifiziert, für welche die "Multicast Channel Allocation Message" bestimmt ist, hinzu. Die gesamte Nachricht mit der "Multicast Channel Allocation Message" inklusive eventueller RLC-Kontrollinformationen (Bezugszeichen DP), dem TCTF-Feld und dem MCID-Feld ist in Fig. 4 dargestellt und mit dem Bezugszeichen SN versehen. Vorteilhafter Weise reichen nur die MAC-Schichten derjenigen Mobilstation UE, die zu der durch das MCID-Feld bezeichneten Multicast-Gruppe gehören, die Nachricht an die RLC-Schicht weiter.

Für den Fall, dass sich Mobilstationen UE im Zustand IDLE MODE oder im Verbindungszustand in den RRC-Zuständen URA_PCH oder CELL_PCH befinden, wird in einer Benachrichtungs-Nachricht, die an die Mobilstationen gesendet wird, als Grund für die Benachrichtigung das Vorliegen von Multicast-Nachrichten angegeben. Insbesondere werden bereits vorhandenen Nachrichten "Paging Type 1" oder "Paging Type 2" verwendet und der Grund für die Benachrichtigung durch diese Nachricht in einem Informationselement "Paging Cause" angegeben, indem diesem Informationselement ein weiterer Wert "Multicast Message" hinzugefügt wird.

Eine Mobilstation UE, die zu einer Multicast-Gruppe gehört, konfiguriert mindestens eine Multicast-Einheit in der BMC-Schicht, die mit einer RLC-Einheit in der RLC-Schicht verbunden ist. Die RLC-Einheit ist außerdem über einen allgemeinen Datenkanal (CTCH) mit der MAC-Schicht verbunden. Zur Datenübertragung wird zudem der CTCH-Kanal in der MAC-Schicht auf einen allgemeinen Transportkanal 11 zur Übertragung von Multicast-Nachrichten abgebildet, wobei dieser allgemeine Transportkanal 11 in der physikalischen Schicht PL auf einen allgemeinen physikalischen Kanal 10 abgebildet wird. Nachdem alle Mobilstationen UE, die zu der jeweiligen Multicast-Gruppe, für welche Nachrichten zur Übertragung vorliegen, gehören, eine Signalisierungsverbindung zu der Funknetzwerk-Kontrolleinheit RNC aufgebaut haben, sendet diese die Ressourcenzuweisungsnachricht "Multicast Channel Allocation Message". Welcher logische Kanal 12(DCCH oder MCCCH) dafür verwendet werden soll, wird beim Aufbau der Signalisierungsverbindung den Mobilstationen UE mitgeteilt. Diejenigen Mobilstationen UE, die zu der entsprechenden Multicast-Gruppe gehören, bauen daraufhin den allgemeinen Transportkanal 11 und den allgemeinen physikalischen Kanal 10 zur Übertragung von Multicast-Nachrichten gemäß der in der Ressourcenzuweisungsnachricht angegebenen Konfiguration auf.

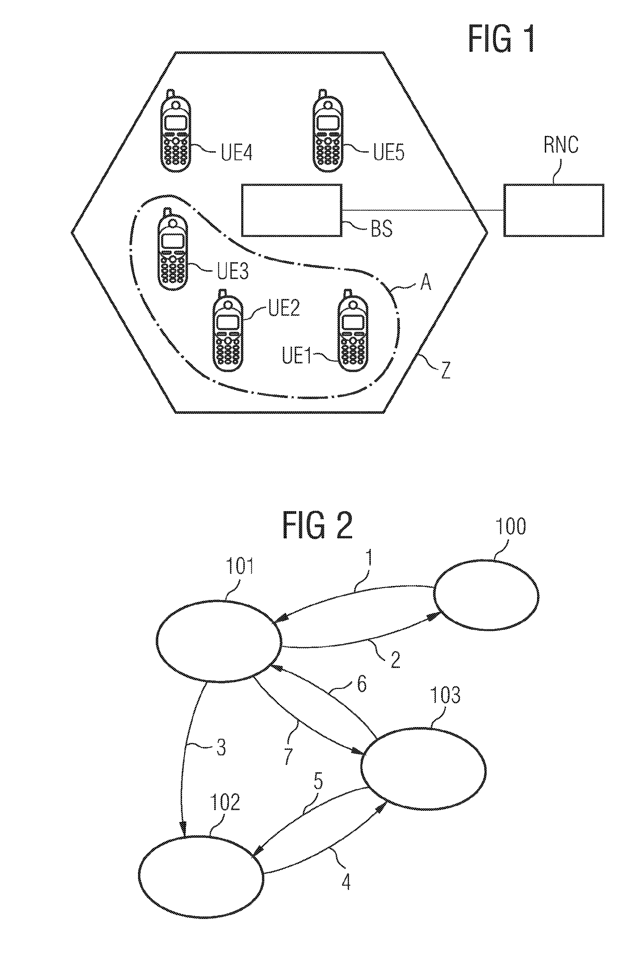

Die zuvor beschriebene Funktionalität kann auch als Zustandsdiagramm dargestellt werden. Das Zustandsdiagramm ist in Fig. 2 gezeigt, wobei die einzelnen Zustände 100-103 folgendermaßen charakterisiert werden können:

Im Zustand 100, welcher auch als "MC_Null" bezeichnet werden kann, gehört die jeweilige Mobilstation keiner Multicast-Gruppe an und das Netzwerk versucht demzufolge nicht, die Mobilstation zu benachrichtigen, wenn eine Multicast-Nachricht zur Übertragung vorliegt.

In einem Zustand 101, welcher auch als "MC_Saving" bezeichnet werden kann, gehört die jeweilige Mobilstation einer Multicast-Gruppe an, wobei eine entsprechende Multicast-Einheit in der BMC-Schicht existiert. Die Mobilstation gelang von dem Zustand 100 in den Zustand 101, indem sich die Mobilstation für eine erste Multicast-Gruppe beim Netzwerk anmeldet, wobei das Netzwerk daraufhin der Mobilstation einen Identifikator für die jeweilige Multicast-Gruppe mitteilt (Zustandsübergang 1 in Fig. 2). In dem Zustand 101 liest die Mobilstation Funknachrichten aus und hört zudem die Benachrichtigungskanäle PICH und PCH. Das Netzwerk benachrichtigt die Mobilstation über die Benachrichtigungskanäle PICH und PCH, wenn Multicast-Nachrichten zur Übertragung vorliegen. Der Zustand 101 entspricht den RRC-Zuständen IDLE MODE, CELL_PCH und URA_PCH. Eine Rückkehr in den Zustand 100 erfolgt, wenn sich die Mobilstation von allen Multicast-Gruppen abmeldet und die entsprechende Multicast-Einheit in der BMC-Schicht gelöscht wird (Zustandsübergang 2).

Erhält die Mobilstation eine Benachrichtigung, dass Multicast-Nachrichten zu der entsprechenden Multicast-Gruppe, zu welcher die Mobilstation gehört, vorliegen, baut die Mobilstation eine Signalisierungsverbindung zu dem Netzwerk auf und wechselt in einen Zustand 102 (Zustandsübergang 3).

In dem Zustand 102, welcher auch als "MC_Monitoring" bezeichnet werden kann, gehört die Mobilstation somit einer Multicast-Gruppe an, es existiert eine Multicast-Einheit in der BMC-Schicht, und es besteht eine Signalisierungsverbindung zwischen der Mobilstation und der Funknetzwerk-Kontrolleinheit RNC, wobei die Mobilstation jederzeit RRC-Nachrichten auf einem allgemeinen Kanal (z.B. dem allgemeinen FACH-Transportkanal) empfangen kann. Dieser Zustand 102 entspricht dem RRC-Zustand CELL_FACH oder CELL_DCH. Hierzu muss die Mobilstation gegenüber dem Stand der Technik derart erweitert werden, dass auch dann immer ein allgemeiner Kanal empfangen werden kann, wenn sich die Mobilstation in dem RRC-Zustand CELL_DCH befindet.

Die Mobilstation erhält anschließend vom Netzwerk die Ressourcenzuweisungsnachricht, mit welcher die Ressourcen eines allgemeinen Transportkanals und eines allgemeinen physikalischen Kanals der Mobilstation zur Übertragung von Multicast-Nachrichten zugewiesen werden. Die Mobilstation baut den allgemeinen Transportkanal und den allgemeinen physikalischen Kanal zum Empfang von Multicast-Nachrichten auf und wechselt in einen Zustand 103 (Zustandsübergang 4).

In dem Zustand 103, welcher auch als "MC_Active" bezeichnet werden kann, gehört die Mobilstation somit einer Multicast-Gruppe an, es besteht eine Multicast-Einheit in der BMC-Schicht, und die Mobilstation hat einen allgemeinen Transportkanal und einen physikalischen Kanal zur Übertragung von Multicast-Nachrichten aufgebaut. Zudem ist die Multicast-Einheit mit einer RLC-Einheit in der RLC-Schicht verbunden, wobei die RLC-Einheit über einen allgemeinen logischen Datenkanal (CTCH-Kanal) mit der MAC-Schicht verbunden ist. Der allgemeine logische Datenkanal ist auf den allgemeinen Transportkanal zur Übertragung von Multicast-Nachrichten abgebildet. Die Mobilstation kann nunmehr Multicast-Nachrichten über diesen allgemeinen Transportkanal und den allgemeinen physikalischen Kanal empfangen. Die Nachrichten werden über den allgemeinen logischen Datenkanal (CTCH) an die entsprechende RLC-Einheit und von dieser an die Multicast-Einheit in der BMC-Schicht weitergeleitet. Die Multicast-Einheit in der BMC-Schicht verwendet eine in der Multicast-Nachricht enthaltene Multicast-Adresse, um die Nachricht an eine entsprechende Anwendung weiterzuleiten.

Nach Ablauf des in der Ressourcenzuweisungsnachricht angegebenen Zeitraums baut die Mobilstation den für die Übertragung von Multicast-Nachrichten vorgesehenen allgemeinen Transportkanal und allgemeinen physikalischen Kanal wieder ab. Bleibt die Signalisierungsverbindung zwischen der Mobilstation und dem Netzwerk zunächst noch bestehen, erfolgt eine Rückkehr in den Zustand 102 (Zustandsübergang 5). Wird hingegen auch die Signalisierungsverbindung zwischen der Mobilstation und dem Netzwerk abgebaut, erfolgt eine Rückkehr in den Zustand 101 (Zustandsübergang 6). Ein Wechsel von dem Zustand 101 in den Zustand 103 findet statt, wenn das Netzwerk der Mobilstation mitteilt, in den RRC-Zustand CELL_PCH überzugehen.

Nachfolgend soll die zuvor allgemein erläuterte Vorgehensweise näher anhand eines bevorzugten Ausführungsbeispiels unter Bezugnahme auf Fig. 1 und Fig. 3 erläutert werden.

Fig. 1 zeigt den Aufbau eines Funknetzwerkes, wie es beispielsweise für den UMTS-Mobilfunkstandard spezifiziert ist. Mehrere Mobilstationen UE1-5 befinden sich in einer Funkzelle Z, die von einer Basisstation BS aufgespannt wird und mit welcher die Mobilstationen über Luftschnittstellen verbunden sind und kommunizieren. Die Basisstation BS ist wiederum über eine Festnetzverbindung mit einer Funknetzwerk-Kontrolleinheit RNC verbunden. Es wird angenommen, dass die Mobilstationen UE1-3 zu einer Multicast-Gruppe A gehören, während die Mobilstationen UE4 und UE5 gemäß diesem Ausführungsbeispiel zu keiner Multicast-Gruppe gehören. Diese Mobilstationen befinden sich somit in dem Multicast-Zustand 100 (vgl. Fig. 2).

Es sei zudem angenommen, dass sich die Mobilstation UE1 im RRC-Zustand IDLE MODE und die Mobilstation UE2 im RRC-Zustand CELL_PCH befindet. Die Mobilstationen UE1 und UE2 befinden sich somit im Multicast-Zustand 101 (vgl. Fig. 2) und haben demzufolge eine Multicast-Einheit MCU in der BMC-Schicht aufgebaut (vgl. Fig. 3), die mit den darüber liegenden Anwendungen über eine Verbindung V1 und über eine weitere Verbindung V2 mit einer RLC-Einheit RLCU (vgl. Fig. 3) der RLC-Schicht verbunden ist. Die RLC-Einheit RLCU ist wiederum über einen allgemeinen logischen Datenkanal 12 (z.B. dem CTCH-Kanal) mit der MAC-Schicht verbunden. Es existiert in diesem Zustand noch kein allgemeiner Transportkanal und kein allgemeiner physikalischer Kanal zur Übertragung von Multicast-Nachrichten. Die Mobilstationen UE1 und UE2 hören auf die Benachrichtungskanäle PICH und PCH.

Die Mobilstation UE3 soll sich gemäß diesem Ausführungsbeispiel im RRC-Zustand CELL_FACH befinden, d.h. die Mobilstation UE3 hat eine Signalisierungsverbindung zu der Funknetzwerk-Kontrolleinheit RNC aufgebaut und kann Signalisierungsnachrichten empfangen. Die Mobilstation UE3 befindet sich somit im Multicast-Zustand 102. Die Mobilstation hat zudem eine Multicast-Einheit MCU in der BMC-Schicht aufgebaut. Diese ist mit den darüber liegenden Anwendungen mit einer Verbindung V1 und über eine weitere Verbindung V2 mit einer RLC-Einheit RLCU der RLC-Schicht verbunden. Die RLC-Einheit ist wiederum über einen allgemeinen logischen Datenkanal 12 mit der MAC-Schicht verbunden. Es existiert in diesem Zustand ebenfalls noch kein allgemeiner Transportkanal 11 und kein allgemeiner physikalischer Kanal 10 zur Übertragung von Multicast-Nachrichten.

Die Signalisierungsverbindung, über welche eine Mobilstation die Ressourcenzuweisungsnachricht "Multicast Channel Allocation Message" empfängt, kann auf zwei verschiedene Weisen konfiguriert werden. In beiden Fällen ist die Signalisierungsverbindung so aufgebaut, dass die Nachricht über einen allgemeinen physikalischen Kanal 10 (z.B. dem SCCPCH-Kanal) zur physikalischen Schicht PL gelangt, wo sie über einen allgemeinen Transportkanal 11 (z.B. dem FACH-Kanal) an die MAC-Schicht weitergegeben wird. Im ersten Fall (Fall A) wird die Nachricht auf einen allgemeinen logischen Kontrollkanal 12 (z.B. dem SHCCH-Kanal) an die RLC-Schicht weitergeleitet, welche die Nachricht schließlich an die RRC-Schicht weitergibt. Erst die RRC-Schicht überprüft dann an Hand der Information über die Multicast-Gruppe, für welche diese Nachricht gesendet wurde, ob die Nachricht für die eigene Mobilstation relevant ist oder nicht. Im zweiten Fall (Fall B) überprüft die MAC-Schicht an Hand der MAC-Kontrollinformationen, die angeben, für welche Multicast-Gruppe die Nachricht bestimmt ist, ob die Nachricht für die jeweilige Mobilstation bestimmt ist oder nicht. Anschließend gibt die MAC-Schicht die Nachricht über einen logischen Kontrollkanal 12 (d.h. dem zuvor erwähnten speziellen MCCCH-Kanal) an die RLC-Schicht weiter, wobei auf diesem logischen Kontrollkanal 12 nur Nachrichten weitergeleitet werden, die für diese Mobilstation bestimmt sind. Die RLC-Schicht gibt die Nachricht dann an die RRC-Schicht weiter.

Es wird nun angenommen, dass eine Nachricht für die Multicast-Gruppe A bei der Funknetzwerk-Kontrolleinheit RNC ankommt. Die Funknetzwerk-Kontrolleinheit RNC weiß, dass sich die Mobilstationen UE2 und UE3 in Zellen befinden, welche von ihr selbst kontrolliert werden. Zudem weiß die Funknetzwerk-Kontrolleinheit RNC, dass diese zu der Multicast-Gruppe A gehören. Da sich die Mobilstation UE1 im RRC-Zustand IDLE MODE befindet, ist die genaue Zelle, in welcher sich die Mobilstation UE1 befindet, der Funknetzwerk-Kontrolleinheit RNC nicht bekannt. Daher sendet die Funknetzwerk-Kontrolleinheit RNC eine Benachrichtigung für die Mobilstation UE1 in allen Zellen, in denen die Mobilstation UE1 vermutet wird. Auch an die Mobilstation UE2 wird eine Benachrichtigung gesendet. Da jedoch der Funknetzwerk-Kontrolleinheit RNC bekannt ist, dass sich die Mobilstation UE2 in der Zelle Z befindet, wird diese Benachrichtigung nur in dieser Zelle Z gesendet.

Die zuvor erläuterten Benachrichtigungen der Funknetzwerk-Kontrolleinheit RNC enthalten vorteilhafter Weise eine Information, die den Grund für die Benachrichtigung, nämlich das Vorliegen von Multicast-Nachrichten, angibt. Insbesondere können für die Benachrichtigungen die bereits vorhandenen RRC-Nachrichten "Paging Type 1" und "Paging Type 2" verwendet werden, die bereits eine Information "Paging Cause", also den Grund für die Benachrichtigung, enthalten. Zu dem Wertebereich dieser Information "Paging Cause" kann hierzu beispielsweise ein Wert "Multicast-Nachricht vorhanden" hinzugefügt werden.

Die Mobilstation UE1, welche sich im RRC-Zustand IDLE MODE befindet, hat noch keine Signalisierungsverbindung zu der Funknetzwerk-Kontrolleinheit RNC aufgebaut. Nach Empfang der zuvor erwähnten Benachrichtigung baut die Mobilstation UE1 daher zunächst eine Signalisierungsverbindung (RRC-Verbindung) zu der Funknetzwerk-Kontrolleinheit RNC auf. Die Mobilstation UE2, welche sich im RRC-Zustand CELL_PCH befindet, reaktiviert ihre Signalisierungsverbindung, indem sie der Funknetzwerk-Kontrolleinheit RNC durch das Senden einer RRC-Nachricht bestätigt, dass sie sich in der Zelle Z befindet. Die Mobilstationen UE1 und UE2 haben somit eine Signalisierungsverbindung aufgebaut und befinden sich im RRC-Zustand CELL_FACH. Sie können somit nun Signalisierungsnachrichten auf einem allgemeinen Transportkanal 11 (z.B. dem FACH-Kanal) und einem allgemeinen physikalischen Kanal 10 (z.B. dem SCCPCH-Kanal) empfangen. Wie schon für die Mobilstation UE3 beschrieben worden ist, kann die Signalisierungsverbindung zum Empfang der Ressourcenzuweisungsnachricht "Multicast Channel Allocation Message" von der Funknetzwerk-Kontrolleinheit RNC auf zwei verschiedene Art und Weisen (Fall A oder Fall B) konfiguriert werden (vgl.oben). Die Mobilstationen UE1, UE2 und UE3 befinden sich somit nunmehr im Multicast-Zustand 102 (vgl. Fig. 2).

Ist die Signalisierungsverbindung zur Übertragung der Nachricht "Multicast Channel Allocation Message" gemäß Fall A konfiguriert, sendet die RRC-Schicht der Funknetzwerk-Kontrolleinheit RNC nun eine Signalisierungsnachricht an die RLC-Schicht, welche eventuell Kontrolldaten hinzufügt und sie anschließend auf einem allgemeinen logischen Kontrollkanal 12 (z.B. dem SHCCH-Kanal) an die MAC-Schicht weiterleitet. Die MAC-Schicht erkennt, dass die Nachricht auf einem allgemeinen Kontrollkanal von der RLC-Schicht zu der MAC-Schicht gelangt ist und über einen allgemeinen Transportkanal an die physikalische Schicht PL weitergeleitet werden soll. Daher fügt die MAC-Schicht der Nachricht eine Kontrollinformation TCTF hinzu und weist dieser Information den Wert "SHCCH" zu. Anschließend wird die Nachricht über einen allgemeinen Transportkanal 11, z.B. dem FACH-Kanal, an die physikalische Schicht PL weitergeleitet, welche diese über einen allgemeinen physikalischen Kanal 10 (z.B. dem SCCPCH-Kanal) an alle Mobilstationen in der Zelle Z sendet, welche sich im RRC-Zustand CELL_FACH oder CELL_DCH befinden. Bei dem vorliegenden Ausführungsbeispiel sind dies die Mobilstationen UE1-5. Diese Mobilstationen empfangen die Nachricht auf dem allgemeinen physikalischen Kanal 10 und geben sie an ihre physikalische Schichten PL weiter, welche die Nachricht auf dem allgemeinen Transportkanal 11 an die MAC-Schichten weiterleiten. Die MAC-Schichten entnehmen dem Feld TCTF der MAC-Kontrollinformationen, dass die Nachricht auf dem allgemeinen logischen SHCCH-Kontrollkanal weitergeleitet werden soll. Die MAC-Schichten entfernen dann die MAC-Kontrollinformationen und leiten die Nachricht über den allgemeinen logischen SHCCH-Kontrollkanal an die RLC-Schichen weiter. Die RLC-Schichten entfernen nun ihrerseits eventuell vorhandene Kontrollinformationen und geben die Nachricht an die über ihnen liegenden RRC-Schichten weiter.

Die Ressourcenzuweisungsnachricht enthält die Konfiguration des allgemeinen Transportkanals 11 und des allgemeinen physikalischen Kanals 10, welche für die nachfolgende Übertragung der Multicast-Nachrichten verwendet werden sollen. Außerdem ist ein Identifikator für die Multicast-Gruppe A, sowie ein Start- und ein Endzeitpunkt, die angeben, wie lange die Ressource der Multicast-Gruppe A zugewiesen sein soll, enthalten. Alternativ können auch einmalig eine oder mehrere Konfigurationen des allgemeinen Transportkanals 11 und des allgemeinen physikalischen Kanals 10, die zur Übertragung von Multicast-Nachrichten verwendet werden sollen, an alle Mobilstationen der Zelle Z gesendet und den Konfigurationen Identifikatoren zugewiesen werden. Für diesen Fall enthält die Ressourcenzuweisungsnachricht anstatt der eigentlichen Konfiguration lediglich den jeweiligen Identifikator, so dass die Mobilstationen daraus auf die gewünschte Konfiguration schließen können.

Da sich in diesem Ausführungsbeispiel die Mobilstationen UE1-5 im RRC-Zustand CELL_FACH befinden, erhalten sie diese Ressourcenzuweisungsnachricht. Da jedoch nur die Mobilstationen UE1-3 zur Multicast-Gruppe A gehören, verwerfen die Mobilstationen UE4 und UE5 die Ressourcenzuweisungsnachricht, da sie nicht über die Multicast-Adresse bzw. den Multicast-Identifikator, welcher in dieser Nachricht enthalten ist, identifiziert werden. Die Mobilstationen UE1, UE2 und UE3 erkennen an Hand des Multicast-Identifikators, dass Multicast-Nachrichten für sie übertragen werden sollen.

Ist die Signalisierungsverbindung zur Übertragung der Ressourcenzuweisungsnachricht gemäß Fall B konfiguriert, sendet die RRC-Schicht der Funknetzwerk-Kontrolleinheit RNC nun eine Signalisierungsnachricht an die RLC-Schicht, die der Nachricht eventuell Kontrolldaten hinzufügt und sie anschließend auf dem logischen Multicast-Kontrollkanal (MCCCH) 12 an die MAC-Schicht weiterleitet. Die MAC-Schicht erkennt, dass die Nachricht auf einem logischen Multicast-Kontrollkanal von der RLC-Schicht zu der MAC-Schicht gelangt ist und über einen allgemeinen Transportkanal 11 an die physikalische Schicht PL weitergeleitet werden soll. Daher fügt die MAC-Schicht der Nachricht die Kontrollinformation TCTF, welcher der Wert "MCCCH" zugewiesen wird, und das Feld MCID, welches den Multicast-Gruppen-Identifikator enthält, hinzu (vgl. Fig. 4). Anschließend wird die Nachricht an die physikalische Schicht PL weitergeleitet, welche diese über einen allgemeinen physikalischen Kanal 10 (z.B. dem SCCPCH-Kanal) an alle Mobilstationen in der Zelle Z sendet, welche sich im RRC-Zustand CELL_FACH oder CELL_DCH befinden (im vorliegenden Fall an die Mobilstationen UE1-5). Diese empfangen die Nachricht auf dem allgemeinen physikalischen Kanal 10 und geben sie an die physikalische Schichten PL weiter, welche die Nachricht auf dem allgemeinen Transportkanal 11 an die MAC-Schichten weiterleiten. Die MAC-Schichten entnehmen dem Feld TCTF der MAC-Kontrollinformation, dass die Nachricht auf dem speziellen logischen Multicast-Kontrollkanal (MCCCH) 12 weitergeleitet werden soll. Daraus erkennen die MAC-Schichten auch, dass ein weiteres Kontrolldatenfeld MCID folgt. Die MAC-Schicht einer jeden Mobilstation bestimmt nun, ob die jeweilige Mobilstation über den im Feld MCID angegebenen Identifikator identifiziert wird. In diesem Ausführungsbeispiel ist dies für die Mobilstationen UE1-3 der Fall. Deren MAC-Schichten entfernen somit die Kontrollinformationen und leiten die Nachricht über den MCCCH-Kanal an die über ihnen liegenden RLC-Schichten weiter. Die RLC-Schichten entfernen nun ihrerseits eventuell vorhandene Kontrollinformationen und geben die Nachricht an die RRC-Schichten weiter. Die RRC-Schichten müssen in diesem Fall nicht mehr überprüfen, ob die Nachricht für eine Multicast-Gruppe gesendet wurde, zu welcher die jeweilige Mobilstation gehört, da dies bereits in den MAC-Schichten geschehen ist. Wie bereits erwähnt worden ist, enthält die Ressourcenzuweisungsnachricht die Konfiguration des allgemeinen Transportkanals 11 und des allgemeinen physikalischen Kanals 10, die für die Übertragung der Multicast-Nachricht verwendet werden sollen. Außerdem ist eine Information über den zeitlichen Start- und Endzeitpunkt enthalten, womit angegeben wird, wie lange die Ressource der Multicast-Gruppe A zugewiesen sein soll. Alternativ können wiederum auch eine oder mehrere Konfigurationen des allgemeinen Transportkanals 11 und des allgemeinen physikalischen Kanals 10, die zur Übertragung von Multicast-Nachrichten verwendet werden sollen, an alle Mobilstationen der Zelle Z gesendet und den Konfigurationen entsprechende Identifikatoren zugewiesen worden sein. Für diesen Fall enthält die Ressourcenzuweisungsnachricht anstatt der eigentlichen Konfiguration lediglich den Identifikator zur Auswahl der jeweiligen Konfiguration.

Die Mobilstationen UE1, UE2 und UE3 konfigurieren nun den allgemeinen Transportkanal 11 und den allgemeinen physikalischen Kanal 10, welche zur Übertragung von Multicast-Nachrichten verwendet werden sollen, entsprechend der in der Ressourcenzuweisungsnachricht enthaltenen Information.

Die Konfiguration der BMC-Schicht, der RLC-Schicht, der MAC-Schicht und der physikalischer Schicht PL ist in Fig. 3 dargestellt.

Die BMC-Schicht ist bereits so konfiguriert, dass eine Multicast-Einheit MCU innerhalb der BMC-Schicht aufgebaut ist. Diese Multicast-Einheit soll erfindungsgemäß alle Multicast-Nachrichten der Multicast-Gruppe A empfangen und über die über ihr liegende Verbindung V1 an die gewünschte Anwendung der Multicast-Gruppe A weiterreichen. Weiterhin besteht bereits eine weitere Verbindung V2 zwischen der Multicast-Einheit MCU in der BMC-Schicht und einer RLC-Einheit RLCU in der RLC-Schicht. Die RLC-Einheit ist über einen allgemeine logischen Kanal 12 zur Übertragung von allgemeinen Daten, bei UMTS mit CTCH ("Common Traffic Channel") bezeichnet, mit der MAC-Schicht verbunden. Innerhalb der MAC-Schicht wird dieser allgemeine logische Kanal 12 auf den neu konfigurierten allgemeinen Transportkanal 11, der zur Übertragung der Multicast-Nachrichten verwendet werden soll und wiederum in der physikalischen Schicht PL auf den zur Übertragung der Multicast-Nachrichten vorgesehenen allgemeinen physikalischen Kanal 10 abgebildet wird, abgebildet.

Zu dem in der Ressourcenzuweisungsnachricht definierten Startzeitpunkt fangen die Mobilstationen UE1-3 an, auf dem allgemeinen physikalischen Kanal 10 Daten zu empfangen. Zum gleichen Zeitpunkt fängt die Funknetzwerk-Kontrolleinheit RNC RNC an, die Multicast-Nachrichten zu senden. Dabei enthalten die gesendeten Multicast-Nachrichtenpakete einen Identifikator der jeweils adressierten Multicast-Gruppe, im vorliegenden Fall der Multicast-Gruppe A. Die empfangenen Multicast-Nachrichtenpakete werden über den allgemeinen Transportkanal 11 und den logischen Kanal 12 an die entsprechende RLC-Einheit RLCU weitergegeben und von dieser über die Verbindung V2 an die Multicast-Einheit MCU in der BMC-Schicht weitergeleitet. In der Multicast-Einheit MCU wird die Multicast-Nachricht über die weitere Verbindung V1 an die entsprechende Anwendung weitergeleitet.

In der Signalisierungsnachricht ist - wie bereits erwähnt worden ist - ein Start- und Endzeitpunkt angegeben, welche die Zeitspanne beschreiben, für deren Dauer die Ressourcen des allgemeinen Transportkanals 11 und des allgemeinen physikalischen Kanals 10 der Multicast-Gruppe A zugewiesen worden sind. Ist diese Zeitspanne abgelaufen, beendet die Funknetzwerk-Kontrolleinheit RNC die Übertragung von Multicast-Nachrichten an diese Multicast-Gruppe. Die Mobilstationen UE1-3 bauen den allgemeinen Transportkanal 11 und den allgemeinen physikalischen Kanal 10 ab. Falls die Mobilstationen auch die Signalisierungsverbindungen abbauen, d.h. in den RRC-Zustand IDLE MODE oder in den RRC-Zustand URA_PCH bzw. CELL_PCH wechseln, befinden sie sich erfindungsgemäß in dem Multicast-Zustand 101. Bleibt die Signalisierungsverbindung bestehen, befinden sie sich im RRC-Zustand CELL_FACH oder CELL_DCH, d.h. die entsprechende Mobilstation befindet sich nach Abbau des allgemeinen Transportkanals 11 und des allgemeinen physikalischen Kanals 10 erfindungsgemäß im Multicast-Zustand 102 (vgl. Fig. 2).

## Patentansprüche

1. Verfahren zum Übertragen von Multicast-Nachrichten in einem Funksystem,
wobei eine von einem Sender (BS, RNC) zu übertragende Multicast-Nachricht für eine Gruppe (A) von Empfängern (UE) bestimmt ist,
umfassend die Schritte:
a) vor der Übertragung einer Multicast-Nachricht wird von dem Sender (BS, RNC) eine Ressourcenzuweisungsnachricht zur Zuweisung von Ressourcen des Funksystems für die Übertragung der Multicast-Nachricht übertragen,
b) von den zu der Gruppe (A) gehörenden Empfängern (UE) wird die im Schritt a) übertragene Ressourcenzuweisungsnachricht ausgewertet und jeweils eine Verbindung zu dem Sender (BS, RNC) entsprechend dieser Ressourcenzuweisungsnachricht aufgebaut, und
c) von dem Sender (BS, RNC) wird die Multicast-Nachricht über die in dem Schritt b) aufgebauten Verbindungen an die einzelnen zu der Gruppe (A) gehörenden Empfänger (UE) übertragen.

2. Verfahren nach Anspruch 1,
**dadurch gekennzeichnet,**
**dass** den zu der Gruppe (A) gehörenden Empfängern (UE) mit der im Schritt a) übertragenen Ressourcenzuweisungsnachricht Ressourcen eines allgemeinen Transportkanals (11) und eines senderseitig auf den allgemeinen Transportkanal abgebildeten allgemeinen physikalischen Kanals (10) des Funksystems zugewiesen werden.

3. Verfahren nach Anspruch 2,
**dadurch gekennzeichnet,**
**dass** die Ressourcenzuweisungsnachricht eine Konfigurationsinformation zur Konfiguration des allgemeinen Transportkanals (11) und des allgemeinen physikalischen Kanals (10) aufweist, wobei die zu der Gruppe (A) gehörenden Empfänger (UE) nach Erhalt der Ressourcenzuweisungsnachricht im Schritt b) den allgemeinen Transportkanal (11) und den allgemeinen physikalischen Kanal (10) entsprechend der Konfigurationsinformation konfigurieren.

4. Verfahren nach Anspruch 3,
**dadurch gekennzeichnet,**
**dass** die Konfigurationsinformation der Ressourcenzuweisungsnachricht einen Identifikator zur Auswahl einer bestimmten Konfiguration aus mehreren vorgegebenen Konfigurationen des allgemeinen Transportkanals (11) und des allgemeinen physikalischen Kanals (10) aufweist.

5. Verfahren nach einem der Ansprüche 2-4
**dadurch gekennzeichnet,**
**dass** die Ressourcenzuweisungsnachricht eine Information über die Zeitspanne, während welcher die Ressourcen des Funksystems zugewiesen sein sollen, aufweist, wobei die zu der Gruppe (A) gehörenden Empfänger (UE) nach Ablauf dieser Zeitspanne die im Schritt b) für die Übertragung von Multicast-Nachrichten aufgebauten Verbindungen zu dem Sender (BS) wieder abbauen.

6. Verfahren nach einem der vorhergehenden Ansprüche,
**dadurch gekennzeichnet,**
**dass** die Ressourcenzuweisungsnachricht von dem Sender (BS, RNC) an die zu der Gruppe (A) gehörenden Empfänger (UE) übertragen wird, falls diese bereits eine Signalisierungsverbindung zu dem Sender (BS, RNC) aufgebaut haben.

7. Verfahren nach einem der vorhergehenden Ansprüche,
**dadurch gekennzeichnet,**
**dass** die Ressourcenzuweisungsnachricht einen die Gruppe (A) identifizierenden Identifikator (MCID) aufweist, wobei die Empfänger (UE) jeweils durch Auswertung dieses Identifikators (MCID) feststellen, ob die Ressourcenzuweisungsnachricht für sie bestimmt ist, und nur in diesem Fall die Ressourcenzuweisungsnachricht auswerten.

8. Verfahren nach Anspruch 7,
**dadurch gekennzeichnet,**
**dass** die Ressourcenzuweisungsnachricht senderseitig über einen allgemeinen logischen Kontrollkanal (12) übertragen wird, wobei jeweils eine RRC-Schicht der Empfänger (UE) durch Auswertung des Identifikators feststellt, ob die Ressourcenzuweisungsnachricht für den entsprechenden Empfänger bestimmt ist.

9. Verfahren nach Anspruch 7,
**dadurch gekennzeichnet,**
**dass** die Ressourcenzuweisungsnachricht senderseitig über einen speziell für die Übertragung von Multicast-Kontrollinformationen vorgesehenen logischen Kontrollkanal (12) übertragen wird, wobei jeweils eine MAC-Schicht der Empfänger (UE) durch Auswertung des Identifikators feststellt, ob die Ressourcenzuweisungsnachricht für den entsprechenden Empfänger bestimmt ist.

10. Verfahren nach Anspruch 9,
**dadurch gekennzeichnet,**
**dass** die MAC-Schicht eines Empfängers (UE), welcher durch Auswertung des in der Ressourcenzuweisungsnachricht enthaltenen Identifikators festgestellt hat, dass die Ressourcenzuweisungsnachricht für den entsprechenden Empfänger bestimmt ist, die Ressourcenzuweisungsnachricht an eine RLC-Schicht des entsprechenden Empfängers (UE) weiterreicht.

11. Verfahren nach Anspruch 9 oder 10,
**dadurch gekennzeichnet,**
**dass** eine MAC-Schicht des Senders (BS, RNC) den speziellen logischen Kontrollkanal (12) zur Übertragung der Ressourcenzuweisungsnachricht an die Empfänger (UE) auf einen allgemeinen Transportkanal (11) abbildet.

12. Verfahren nach einem der Ansprüche 8-11,
**dadurch gekennzeichnet,**
**dass** eine MAC-Schicht des Senders (BS, RNC) der Ressourcenzuweisungsnachricht eine die Art des verwendeten logischen Kontrollkanals (12) bezeichnende Kontrollinformation (TCTF) hinzufügt.

13. Verfahren nach einem der Ansprüche 7-12,
**dadurch gekennzeichnet,**
**dass** eine MAC-Schicht des Senders (BS, RNC) der Ressourcenzuweisungsnachricht eine Kontrollinformation mit dem die jeweilige Gruppe (A) von Empfängern (UE) identifizierenden Identifikator (MCID) hinzufügt.

14. Verfahren nach einem der vorhergehenden Ansprüche,
**dadurch gekennzeichnet,**
**dass** von dem Sender (BS, RNC) bei Vorliegen einer zu übertragenden Multicast-Nachricht eine Benachrichtigung über das Vorliegen der Multicast-Nachricht über das Funksystem übertragen wird.

15. Verfahren nach Anspruch 14,
**dadurch gekennzeichnet,**
**dass** die übertragene Benachrichtigung eine Information über den Benachrichtigungsgrund, welche mit einem Hinweis auf das Vorliegen der zu übertragenden Multicast-Nachricht belegt ist, aufweist.

16. Verfahren nach einem der vorhergehenden Ansprüche,
**dadurch gekennzeichnet,**
**dass** sich ein Empfänger (UE) zur Zugehörigkeit zu der Gruppe (A) über das Funksystem beim Sender (BS, RNC) anmeldet, wobei der Sender (BS, RNC) dem Empfänger (UE) daraufhin über das Funksystem einen die Gruppe (A) identifizierenden Identifikator mitteilt.

17. Verfahren nach Anspruch 16,
**dadurch gekennzeichnet,**
**dass** der Empfänger (UE) nach seiner Zuordnung zu der Gruppe (A) in einer BMC-Schicht mindestens eine entsprechende Multicast-Einheit (MCU), welche mit einer entsprechenden RLC-Einheit (RLCU) in einer RLC-Schicht des Empfängers (UE) verbunden ist, konfiguriert.

18. Verfahren nach Anspruch 17,
**dadurch gekennzeichnet,**
**dass** die RLC-Einheit (RLCU) über einen allgemeinen logischen Kontrollkanal (12) mit einer MAC-Schicht des Empfängers (UE) verbunden ist.

19. Verfahren nach Anspruch 18 und einem der Ansprüche 2-5,
**dadurch gekennzeichnet,**
**dass** der allgemeine logische Kontrollkanal (12) über die MAC-Schicht mit dem allgemeinen Transportkanal (11) verbunden ist.

20. Verfahren nach einem der Ansprüche 17-19,
**dadurch gekennzeichnet,**
**dass** die RLC-Einheit (RLCU) bei Abmeldung des Empfängers (UE) von der Gruppe (A) aufgelöst wird.

21. Verfahren nach einem der Ansprüche 17-20,
**dadurch gekennzeichnet,**
**dass** der Empfänger (UE) bei Empfang einer entsprechenden Benachrichtigung des Senders (BS, RNC) über das Vorliegen einer zu übertragenden Multicast-Nachricht eine Signalisierungsverbindung zu dem Sender (BS, RNC) aufbaut.

22. Verfahren nach Anspruch 21,
**dadurch gekennzeichnet,**
**dass** der Sender (BS, RNC) die Ressourcenzuweisungsnachricht überträgt, wenn alle zu der Gruppe (A), für welche die jeweilige Multicast-Nachricht bestimmt ist, gehörenden Empfänger (UE) eine Signalisierungsverbindung zu dem Sender (BS, RNC) aufgebaut haben.

23. Verfahren nach Anspruch 22,
**dadurch gekennzeichnet,**
**dass** den Empfängern (UE) von dem Sender (BS, RNC) beim Aufbau der Signalisierungsverbindung mitgeteilt wird, welcher logische Kanal (12) für die Übertragung der Ressourcenzuweisungsnachricht verwendet wird.

24. Verfahren nach einem der Ansprüche 21-23 und Anspruch 5,
**dadurch gekennzeichnet,**
**dass** nach Ablauf der gemäß der Ressourcenzuweisungsnachricht vorgesehenen Zeitspanne neben dem allgemeinen Transportkanal (11) und dem allgemeinen physikalischen Kanal (10) auch die Signalisierungsverbindung zwischen den zu der Gruppe (A) gehörenden Empfängern (UE) und dem Sender (BS, RNC) abgebaut wird.

25. Verfahren nach einem der vorhergehenden Ansprüche,
**dadurch gekennzeichnet,**
**dass** das Funksystem ein Mobilfunksystem ist, wobei der Sender (BS, RNC) der Netzwerkseite des Mobilfunksystems entspricht und die Empfänger (UE) jeweils einer Mobilstation entsprechen.

26. Verfahren nach Anspruch 25,
**dadurch gekennzeichnet,**
**dass** das Funksystem ein UMTS-Mobilfunksystem ist.

27. Funksystem zum Übertragen von Multicast-Nachrichten,
mit einem Sender (BS, RNC) zum Übertragen von Multicast-Nachrichten, welche für eine Gruppe (A) von Empfängern (UE) bestimmt sind,
wobei der Sender (BS, RNC) derart ausgestaltet ist, dass er vor der Übertragung einer Multicast-Nachricht eine Ressourcenzuweisungsnachricht zur Zuweisung von Ressourcen des Funksystems für die Übertragung der Multicast-Nachricht überträgt, und
wobei die zu der Gruppe (A) gehörenden Empfänger (UE) derart ausgestaltet sind, dass sie die von dem Sender (BS, RNC) übertragene Ressourcenzuweisungsnachricht auswerten und jeweils eine Verbindung zu dem Sender (BS, RNC) entsprechend dieser Ressourcenzuweisungsnachricht aufbauen, wobei der Sender (BS, RNC) die Multicast-Nachricht über die von den zu der Gruppe (A) gehörenden Empfängern (UE) aufgebauten Verbindungen an die einzelnen zu der Gruppe (A) gehörenden Empfänger (UE) überträgt.

28. Funksystem nach Anspruch 27,
**dadurch gekennzeichnet,**
**dass** das Funksystem zur Durchführung des Verfahrens nach einem der Ansprüche 1-26 ausgestaltet ist.

29. Sender zum Übertragen von Multicast-Nachrichten in einem Funksystem,
wobei eine Multicast-Nachricht für eine Gruppe (A) von Empfängern (UE) in dem Funksystem bestimmt ist,
wobei der Sender (BS, RNC) derart ausgestaltet ist, dass er vor der Übertragung einer Multicast-Nachricht eine Ressourcenzuweisungsnachricht zur Zuweisung von Ressourcen des Funksystems für die Übertragung der Multicast-Nachricht überträgt, und
wobei der Sender (BS, RNC) derart ausgestaltet ist, dass er an die einzelnen zu der Gruppe (A) gehörenden Empfänger die Multicast-Nachricht jeweils über eine Verbindung überträgt, welche von den einzelnen Empfängern (UE) nach Erhalt der Ressourcenzuweisungsnachricht entsprechend dieser Ressourcenzuweisungsnachricht aufgebaut worden sind.

30. Sender nach Anspruch 29,
**dadurch gekennzeichnet,**
**dass** der Sender (BS, RNC) zur Durchführung des Verfahrens nach einem der Ansprüche 1-26 ausgestaltet ist.

31. Emfänger zum Empfangen von Multicast-Nachrichten in einem Funksystem,
wobei eine Multicast-Nachricht für eine Gruppe (A) von Empfängern (UE) in dem Funksystem bestimmt ist,
wobei der Empfänger (UE) derart ausgestaltet ist, dass er eine von einem Sender (BS, RNC) vor der Übertragung der Multicast-Nachricht übertragene Ressourcenzuweisungsnachricht auswertet und eine Verbindung zu dem Sender (BS, RNC) entsprechend dieser Ressourcenzuweisungsnachricht aufbaut, falls der Empfänger (UE) zu der Gruppe (A) von Empfängern gehört, für welche die Multicast-Nachricht bestimmt ist, um anschließend die von dem Sender (BS, RNC) über die von dem zu der Gruppe (A) gehörenden Empfänger (UE) aufgebaute Verbindung übertragene Multicast-Nachricht zu empfangen.

32. Empfänger nach Anspruch 31,
**dadurch gekennzeichnet,**
**dass** der Empfänger (UE) zur Durchführung des Verfahrens nach einem der Ansprüche 1-26 ausgestaltet ist.
